(19) Europäisches Patentamt
European Patent Office
Office européen des brevets

(11) Veröffentlichungsnummer: **0 210 136**
**B1**

(12) # EUROPÄISCHE PATENTSCHRIFT

(45) Veröffentlichungstag der Patentschrift: **27.12.89**

(51) Int. Cl.⁴: **C 08 G 65/40**, C 08 G 65/48, C 08 L 71/00

(21) Anmeldenummer: **86810327.6**

(22) Anmeldetag: **18.07.86**

(54) **Vernetzbare Polyätherharze.**

(30) Priorität: **26.07.85 CH 3242/85**

(43) Veröffentlichungstag der Anmeldung: **28.01.87 Patentblatt 87/5**

(45) Bekanntmachung des Hinweises auf die Patenterteilung: **27.12.89 Patentblatt 89/52**

(84) Benannte Vertragsstaaten: **CH DE FR GB IT LI NL**

(56) Entgegenhaltungen:
**EP-A-0 030 033**
**EP-A-0 106 023**
**EP-A-0 113 112**
**EP-A-0 157 732**
**US-A-4 510 296**

(73) Patentinhaber: **CIBA- GEIGY AG, Klybeckstrasse 141, CH- 4002 Basel (CH)**

(72) Erfinder: **Eldin, Sameer H., Dr., Route de Schiffenen 10, CH- 1700 Fribourg (CH)**

EP 0 210 136 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue, bestimmte aliphatische und aromatische Strukturelemente enthaltende und mit Aralkoxyendgruppen verkappte Polyätherharze, die vernetzt werden können, Verfahren zur Herstellung dieser Polyätherharze sowie die aus den Polyätherharzen durch Vernetzung erhaltenen Produkte.

Polyätherharze weisen, wie auch andere Thermoplaste, neben den bekannten technischen Vorteilen vor allem den Nachteil auf, dass sie unter Last bei erhöhten Temperaturen ein ausgesprochenes Kriechverhalten zeigen und ferner gegenüber organischen Lösungsmitteln ungenügend beständig sind.

Es hat nicht an Versuchen gefehlt, diesen Mangel durch Vernetzung der Polyätherharze zu beheben, indem man die Polyätherharze durch Zugabe eines Vernetzungsmittels, wie bestimmte Biphenylenverbindungen (US Patent 4 269 953) oder Schwefel bzw. organische Schwefelverbindungen (GB Patent 1 357 114), vernetzt oder indem man Polyätherpolymere mit reaktiven, die Vernetzung bewirkenden Endgruppen verkappt. Als solche Endgruppen werden beispielsweise im US Patent 3 763 101 ungesättigte alicyclische Endo-Gruppierungen und in der EP-Anmeldung 0 067 976 Nadicimidyl-, Maleinimidyl- oder Äthinylgruppen offenbart.

Es wurde nun gefunden, dass man in einfacher Weise zu selbstvernetzbaren Polyätherharzen gelangt, wenn man die aus bestimmten aliphatischen und aromatischen Strukturelementen bestehenden Polyäther mit Aralkoxyendgruppen verkappt.

Gegenstand vorliegender Erfindung sind somit Polyätherharze mit einer spezifischen Viskosität von 0,1 bis 2,5, gemessen bei 30°C an einer 2-%-igen Lösung in Dimethylformamid, die Aralkoxyendgruppen der Formel I

-O-R-Ar (I)

aufweisen und, bezogen auf die Gesamtmenge der im Polyätherharz vorhandenen Strukturelemente, 100 bis 10 Mol-% des wiederkehrenden Strukturelementes der Formel II

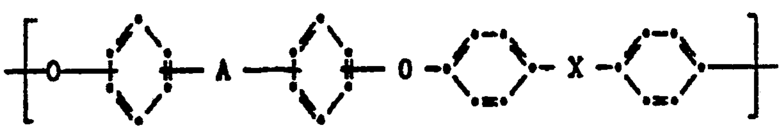

(II)

und 90 bis 0 Mol-% des wiederkehrenden Strukturelementes der Formel III

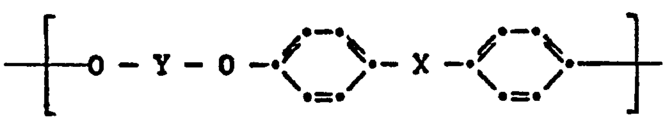

(III)

enthalten, worin

R ein Alkylen mit 1 bis 10 C-Atomen bedeutet,
Ar ein unsubstituiertes oder durch $C_1$-$C_4$-Alkyl substituiertes Phenyl, Naphthyl oder Anthryl bedeutet,
A für einen Rest der Formel IV

$$(-\underset{R^1}{\underset{|}{CH}}-)_p \qquad (IV)$$

steht, worin, wenn $R^1$ ein Wasserstoffatom bedeutet, p für eine Zahl von 1 bis 100 steht, oder, wenn $R^1$ ein unsubstituiertes oder durch $C_1$-$C_4$-Alkyl kernsubstituiertes Aryl oder Aralkyl mit 6 oder 10 C-Atomen im Ring oder Ringsystem und bis zu 10 C-Atomen im Alkylenrest bedeutet, p für die Zahl 1 steht, X für

$-SO_2-$, $-CO-$, $-SO-$, $-N{=}N-$, $-CF_2-CF_2-$, 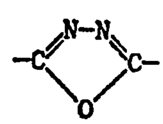 ,

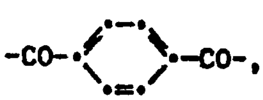 , 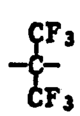 , $-CH{=}CH-$, 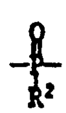 oder 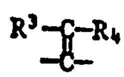

steht,

worin $R^2$ ein $C_1$-$C_8$-Alkyl, $R^3$ und $R^4$ je ein Wasserstoff- oder Halogenatom bedeuten, Y einen Rest der Formel V oder VI

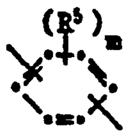 (V) oder 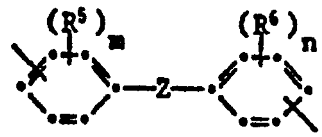 (VI)

bedeutet, worin m und n je für Null oder eine Zahl von 1 bis 4 stehen, $R^5$ und $R^6$ gleich oder verschieden sind und je ein Halogenatom, unsubstituiertes oder phenylsubstituiertes $C_1$-$C_4$-Alkyl oder $C_1$-$C_4$-Alkoxy bedeuten, und, wenn n und m je für 1 oder 2 stehen, $R^5$ und $R^6$ auch je ein Allyl bedeuten und Z für eine direkte Bindung oder einen der folgenden Reste -O-, -SO-, $SO_2$-, -S-, -S-S-,

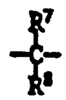 , 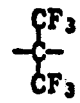 ,

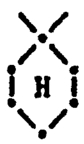 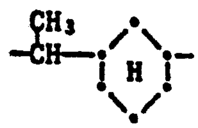 oder 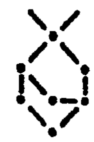

steht, worin $R^7$und $R^8$ unabhängig voneinander je ein $C_1$-$C_4$-Alkyl oder Phenyl bedeuten.

Vorzugsweise enthalten die erfindungsgemässen Polyätherharze 100 bis 20 Mol-%, insbesondere 50 bis 30 Mol-%, des wiederkehrenden Strukturelementes der Formel II und 80 bis 0 %, insbesondere 70 bis von 50 Mol-%, des wiederkehrenden Strukturelementes der Formel III.

Die erfindungsgemässen Polyätherharze weisen ferner vorzugsweise eine spezifische Viskosität von 0,1 bis 1,5, insbesondere von 0,1 bis 1,0, auf.

Es ist allgemein bekannt, dass die spezifische Viskosität ein Mass für das Molekulargewicht von Polymeren darstellt. Die angegebenen Werte der spezifischen Viskosität von 0,1 bis 2,5 entsprechen einem durchschnittlichen Molekulargewichtsbereich von etwa 1 000 bis 50 000.

Vorzugsweise enthalten die erfindungsgemässen Polyätherharze Endgruppen der Formel I worin R ein Alkylen mit 1 bis 7 C-Atomen, insbesondere 1 bis 3 C-Atomen, bedeutet und Ar Phenyl oder ein durch $C_1$-$C_3$-Alkyl substituiertes Phenyl, insbesondere Phenyl oder Tolyl, bedeutet.

Der Rest A im Strukturelement der Formel II bedeutet vorzugsweise einen Rest der Formel IV, worin $R^1$ entweder ein Wasserstoffatom bedeutet und p für eine Zahl von 1 bis 20 steht oder $R^1$ Phenyl oder Benzyl bedeutet und p für die Zahl 1 steht. Insbesondere bedeuten in der Formel IV $R^1$ ein Wasserstoffatom und p eine Zahl von 1 bis 4.

Der Rest X in den Strukturelementen der Formeln II und III steht vorzugsweise für

$-SO_2-$, $-CO-$, $-SO-$, $-CF_2-CF_2-$, 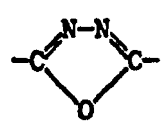 , $-N=N-$,

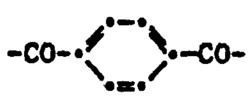 oder 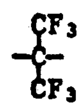 ,

insbesondere für $-SO_2-$ oder -CO-.

Der Rest Y im Strukturelement der Formel III besteht vorzugsweise aus einem Rest der Formel V oder VI, worin die freien Valenzen zueinander oder zum Rest 2 in Formel VI in p-Stellung stehen, n und m je für null, 1 oder 2 stehen, $R^5$ und $R^6$ je ein $C_1$-$C_4$-Alkyl oder Allyl bedeuten und Z für -O-, -S-, Isopropyliden oder Hexafluorisopropyliden steht.

Insbesondere bedeutet Y einen Rest der Formel VI, worin die freien Valenzen zum Rest Z in p-Stellung stehen; m und n null bedeuten und Z für -O-, -S- oder Isopropyliden steht.

Die erfindungsgemässen Polyätherharze können z. B. hergestellt werden, indem man eine Dihalogenverbindung der Formel VII

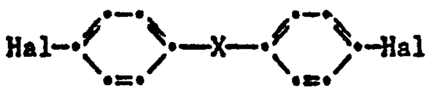

(VII)

mit einem geringen äquimolaren Überschuss einer Verbindung der Formel VIII

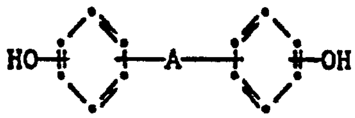

(VIII)

oder eines Gemisches aus einer Verbindung der Formel VIII und einem darin in einer Menge von bis zu 90 Mol-%, vorzugsweise bis zu 80 Mol-%, enthaltenen Phenol der Formel IX

HO-Y-OH (IX),

worin X, A und Y die gleiche Bedeutung wie in Formel II bzw. III haben und Hal für ein Halogenatom, vorzugsweise ein Fluor- oder Chloratom, insbesondere Chloratom, steht, in Gegenwart von Alkali in einem polaren aprotischen Lösungsmittel polykondensiert, bis das erhaltene Polyätherharz eine spezifische Viskosität von 0,1 bis 2,5, gemessen bei 30°C an einer 2-%-igen Lösung in Dimethylformamid, aufweist und anschliessend das Hydroxyl- bzw. Phenolat-Endgruppen aufweisende Polyätherharz mit äquivalenten Mengen einer Verbindung der Formel X

Hal-R-Ar (X),

worin R und Ar die gleiche Bedeutung wie in Formel I haben und Hal für ein Halogenatom, vorzugsweise Brom- oder Chloratom, steht, in einem organischen Lösungsmittel zum Polyätherharz mit Aralkoxyendgruppen umsetzt.

Unter einem geringen äquimolaren Überschuss einer Verbindung der Formel VIII oder eines Gemisches aus Verbindungen der Formel VIII und Formel IX versteht man in diesem Zusammenhang eine etwas grössere als äquimolare Menge, die erforderlich ist, damit das erhaltene Polyätherharz Hydroxylendgruppen, bzw., wenn in stark alkalischem Medium gearbeitet wird, Phenolatendgruppen aufweist.

Die besonders bevorzugten Polyätherharze werden hergestellt, indem man eine Dihalogenverbindung der Formel VII mit einem Gemisch aus 50 bis 30 Mol-% einer Verbindung der Formel VIII und 70 bis 50 Mol-% eines Phenols der Formel IX im geringen äquimolaren Überschuss polykondensiert.

Die Polykondensationsreaktion wird vorzugsweise bis zu einer spezifischen Viskosität von 0,1 bis 1,5, insbesondere 0,1 bis 1,0, der Polyätherharze durchgeführt.

Vorzugsweise führt man die Polykondensation ferner in Gegenwart eines Schleppmittels, zum Beispiel Chlorbenzol, durch, um das bei der Umsetzung gebildete Wasser azeotrop aus dem Reaktionsgemisch entfernen zu können.

Als Alkali verwendet man bei der Polykondensation in der Regel starke Alkalien, wie festes Natriumhydroxid oder wässrige Natronlauge, doch können auch andere alkalische Reagentien, wie Kaliumhydroxid, Bariumhydroxid, Calciumhydroxid, Natrium- oder Kaliumcarbonat, Verwendung finden.

Polare, aprotische Lösungsmittel, die beim Polykondensationsverfahren zur Herstellung der Polyätherharze eingesetzt werden, sind beispielsweise Dimethylsulfoxid, Dimethylacetamid, Diäthylacetamid, Tetramethylharnstoff, N-Methylcaprolactam, N-Methylpyrrolidon, Aceton, Dioxan, Essigester und Tetrahydrofuran.

Bei der Umsetzung der Hydroxyl- bzw. Phenolat-Endgruppen aufweisenden Polyätherharze mit einer Halogenverbindung der Formel X können die üblichen organischen Lösungsmittel eingesetzt werden, wie beispielsweise aliphatische Kohlenwasserstoffe, wie Pentan, Hexan, Heptan oder Oktan, cycloaliphatische Kohlenwasserstoffe, wie Cyclohexan oder Cyclopentan, aromatische Kohlenwasserstoffe, wie Benzol, Toluol oder Xylole, sowie aliphatische oder cyclische Äther, wie Diäthyläther, Dioxan oder Tetrahydrofuran und chlorierte aliphatische Kohlenwasserstoffe, wie Methylenchlorid, Chloroform, Tetrachlormethan, Trichloräthylen und Dichloräthan.

Die Dihalogenverbindungen der Formel VII sind bekannt und zum Teil im Handel erhältlich. Geeignete Verbindungen der Formel VII sind beispielsweise 4,4'-Dichlordiphenylsulfon, 4,4'-Difluordiphenylsulfon, 4,4'-Dichlordiphenylsulfoxid, 4,4'-Dichlorbenzophenon, 4,4'-Dichlorazobenzol, 1,2-Bis-(p-chlorphenyl)-tetrafluoräthan und 2,2-Bis-(p-fluor-phenyl)hexafluorpropan.

Die Phenole der Formel VIII stellen ebenfalls bekannte, zum Teil im Handel erhältliche Verbindungen dar. Beispiele für geeignete zweiwertige Phenole, die beispielsweise zur Herstellung der erfindungsgemässen Polyätherharze eingesetzt werden können, sind Bisphenol F, 3,3'-Diallylbisphenol F, Bis-(4-hydroxyphenyl)phenylmethan, Bis-(4-hydroxy-2,6-dimethyl-3-methoxyphenyl)-methan und α,ω-Di-(p-hydroxyphenyl)-alkane, wie 1,2-Bis-(4-hydroxyphenyl)äthan oder 1,6-Bis-(4-hydroxyphenyl)-hexan. Die α,ω-Di-(p-hydroxyphenyl)-alkane können beispielsweise nach dem in "The Journal of the American Chemical Society", Band 62 (1940), Seite 413 - 415, offenbarten

Verfahren hergestellt werden, indem man ein lineares Alkandicarbonsäuredichlorid mit 1 bis 98 C-Atomen in der linearen Alkylenkette im Molverhältnis von 1 : 2 mit einem Alkylphenyläther, z. B. Anisol oder Phenetol, unter HCl-Abspaltung zur entsprechenden Diketonverbindung kondensiert, danach die beiden Ketogruppen zu Methylengruppen hydriert und anschliessend die beiden Alkoxygruppen hydrolysiert.

Geeignete Alkan-dicarbonsäuredichloride zur Herstellung der α,ω-Di-(p-hydroxyphenyl)-alkane sind beispielsweise die Säuredichloride der Bernsteinsäure, Glutarsäure, Adipinsäure, Pimelinsäure, Sebacinsäure, Nonan-, Decan-, Undecan- und Tetradecandicarbonsäure.

Auch die Phenole der Formel IX stellen bekannte Verbindungen dar, die zum Teil im Handel erhältlich sind. Beispiele für solche Verbindungen sind Hydrochinon, Methylhydrochinon, 2,3-Dimethylhydrochinon, 2,5-Bis-[α-phenyläthyl]-hydrochinon, Resorcin, 2-Allylresorcin, 4,4'-Dihydroxydiphenyl, Bis-(4-hydroxyphenyl)-äther, 4,4'-Dihydroxy-2,6-dimethyldiphenyläther, Bis-(4-hydroxy-3-isobutylphenyl)-äther, Bis-(4-hydroxy-3-isopropylphenyl)-äther, Bis-(4-hydroxy-3-chlorphenyl)-äther, Bis-(4-hydroxy-3-fluorphenyl)-äther, Bis-(4-hydroxy-3-bromphenyl)-äther, 4,4'-Dihydroxy-3,6-dimethoxydiphenyläther, 4,4'-Dihydroxy-2,5-diäthoxydiphenyläther, Bis-(4-hydroxyphenyl)-sulfon, 5'-Chlor-4,4'-dihydroxydiphenylsulfon, Bis-(4-hydroxyphenyl)-thioäther, Bisphenol A, 3,3'-Diallylbisphenol A, Tetraallylbisphenol A, 2,2-Bis-(3-methyl-4-hydroxyphenyl)-propan, 2,2-Bis-(2,3,5,6-tetramethyl-4-hydroxyphenyl)-propan, 2,2-Bis(3-phenyl-4-hydroxyphenyl)-propan, 2,2-Bis-(3-isopropyl-4-hydroxyphenyl)-propan, 2,2-Bis-(2-isopropyl-4-hydroxyphenyl)-propan, 2,2-Bis-(3,5-dibrom-4-hydroxyphenyl)-propan, 2,2-Bis-(4-hydroxyphenyl)-pentan, 3,3-Bis-(4-hydroxyphenyl)-pentan, 2,2-Bis-(4-hydroxyphenyl)-1-phenylpropan und 2,2-Bis-(4-hydroxyphenyl)-1,1,1,3,3,3-hexafluorpropan.

Die zur Verkappung der Hydroxyl- bzw. Phenolat-Endgruppen aufweisenden Polyätherharze verwendbaren Verbindungen der Formel X sind ebenfalls bekannt und zum Teil im Handel erhältlich. Geeignete Verbindungen der Formel X sind beispielsweise Benzylbromid, Benzylchlorid, α-Brom-p-xylol, α-Brom-o-xylol, α-Chlor-o-xylol, α-Chlor-p-xylol, α-Chlor-m-xylol, α-Bromäthylbenzol, 1-(Chlormethyl)-naphthalin, 2-(Brommethyl)-naphthalin, 1-(Chlormethyl)-2-methylnaphthalin, 4-(Chlormethyl)-biphenyl, 9-(Chlormethyl)-anthracen, Bromdiphenylmethan, Chlordiphenylmethan.

Die erfindungsgemässen Polyätherharze können in der für Thermoplasten üblichen Weise eingesetzt und verarbeitet werden. Sie können beispielsweise als Press-, Überzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyätherharzen die üblichen Zusatzstoffe, wie beispielsweise Füllstoffe, Pigmente, Stabilisatoren oder Verstärkungsmittel, wie Kohlenstoff-, Bor-oder Glasfasern, zugegeben werden. Die erfindungsgemässen Polyätherharze können auch zusammen mit anderen Thermoplasten, wie beispielsweise Polyester, Polyamide, Polyimide, Polyolefine oder Polyurethane, insbesondere mit den konventionellen Polyätherharzen, verarbeitet werden.

Vorzugsweise eignen sich die erfindungsgemässen Polyätherharze als Matrixharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Wie eingangs erwähnt, können die erfindungsgemässen Polyätherharze vernetzt werden. Im Falle einer thermischen Vernetzung kann diese in Gegenwart von Sauerstoff oder, nach vorheriger Oxidation mittels Sauerstoffbehandlung, auch unter anaeroben Bedingungen, z. B. in der Laminierpresse, erfolgen.

Gegenstand vorliegender Erfindung sind somit auch die durch Vernetzung der erfindungsgemässen Polyätherharze erhaltenen Produkte.

Die thermische Vernetzung kann gegebenenfalls in Gegenwart von Radikalbildnern, z. B. anorganischen oder organischen Peroxiden, wie Kaliumperoxidsulfat oder Benzoylperoxid, Azoverbindungen, wie Azoisobutyronitril, organischen Hydroperoxiden, wie Cumolhydroperoxid oder tert.-Butylhydroperoxid, α-Halogenacetophenon, Benzoin oder dessen Äthern, Benzophenon, Benzpinakol, Benzilacetalen, Anthrachinonen, Arsinen, Phosphinen, Thioharnstoffen, Redox-Initiatorsystemen, anaerobischen Initiatorsystemen, Metallsalzen oder Metallkomplexverbindungen vorgenommen werden.

Im Falle einer Vernetzung der erfindungsgemässen Polyätherharze mittels energiereichen Strahlen kann diese zum Beispiel mit Röntgenstrahlen, beschleunigten Elektronen, von einer $^{60}$Co-Quelle ausgesandten γ-Strahlen oder mit UV-Strahlen vorgenommen werden.

Für die anaerobe Vernetzung der erfindungsgemässen Polyätherharze werden diese zweckmässig vorher in einem organischen Lösungsmittel, vorzugsweise polaren aprotischen Lösungsmitteln, und in Gegenwart einer katalytischen Menge eines Radikalbildners vorzugsweise solange mit Sauerstoff behandelt, bis sich die anfängliche spezifische Viskosität des eingesetzten Polyätherharzes etwa verdoppelt bis verfünffacht hat. Bei der Sauerstoffbehandlung der erfindungsgemässen Polyätherharze entstehen mutmasslich an den Alkyl- bzw. Alkylengruppen Hydroperoxidgruppen, welche eine Vernetzung der erfindungsgemässen Polyätherharze unter anaeroben Verarbeitungsbedingungen erlauben.

Durch die Vernetzung der erfindungsgemässen Polyätherharze erhält man in gebräuchlichen organischen Lösungsmitteln nicht mehr lösliche Polymere, die sich ausserdem durch eine bedeutend höhere Glasumwandlungstemperatur sowie durch eine hohe Widerstandsfähigkeit gegenüber Wasser und Hitze auszeichnen.

Die in den folgenden Beispielen angegebenen spezifischen Viskositäten ($\eta_{sp.}$) werden, falls nicht anders angegeben wird, bei 30°C an einer 2-%-igen Lösung des Polymers in Dimethylformamid gemessen. Die Glasübergangstemperatur (Tg) des Polymers wird mit dem Torsional Braid Analyzer bestimmt, wobei Aufheizgeschwindigkeiten von 2°C/Minute angewendet werden.

**Beispiel 1**

a) Herstellung eines Polyätherharzes.

In einem 2,5 Liter-Kolben, versehen mit Rührer, Thermometer, Wasserabscheider, Kühler und $N_2$-Anschluss, werden 188,02 g (0,7425 Mol, bezogen auf 99,2-%-ige Reinheit) p,p'-Dichlorbenzophenon, 50,08 g (0,250 Mol) Bisphenol F (technisches Produkt, bestehend aus p,p'-, o,o'- und o,p'-Isomeren) und 114,15 g (0,500 Mol, bezogen auf 98,6-%-ige Reinheit) Bisphenol A in 650 ml Dimethylsulfoxid und 2300 ml Chlorbenzol vorgelegt. Während der Reaktion wird $N_2$ durch die Apparatur geleitet. Die Reaktionslösung wird mittels eines Heizbades auf 60 - 65°C aufgeheizt. Bei 64°C werden zur klaren, leicht gelbbraunen Lösung 120,00 g einer 50-%-igen wässrigen Natronlauge zugegeben, wobei die Lösung sofort etwas dunkler und trüber wird. Während 2 2/3 Stunden wird die Reaktionslösung langsam auf eine Temperatur von 134°C aufgeheizt, wobei Wasser und Chlorbenzol azeotrop abdestillieren. Bei 134°C werden 100 ml Chlorbenzol dazugegeben und die Reaktionslösung während einer Stunde auf 158°C aufgeheizt und anschliessend bei 155 - 160°C während 5 Stunden polykondensiert. Dann wird die Reaktionslösung vorsichtig mit 2000 ml Chlorbenzol verdünnt, bei 90 - 95°C filtriert und der Filterrückstand mit 100 ml Chlorbenzol heiss gewaschen. Die Polymerlösung wird am Vakuum-Rotationsverdampfer vollständig eingeengt. Ausbeute: 297,3 g (100 % der Theorie). Kenndaten des Polymers:

$\eta_{sp}$ = 0,302
Tg = 91°C.

b) Herstellung des Polyätherharzes mit Xylylätherendgruppen. 297 g des gemäss Beispiel 1a) erhaltenen Polyäthers werden in einem 2,5 Liter-Kolben in 1800 ml Äthylenchlorid bei 60°C gelöst. Die dunkelbraune Lösung wird auf 70 - 75°C aufgeheizt und bei 72°C werden 28,0 g α-Brom-p-xylol zugegeben (pH-Wert ca. 9). Dann werden in 4 weiteren Portionen 6,8 g α-Brom-p-xylol zur Reaktionslösung zugegeben. Der pH-Wert der nun hellbraunen Reaktionslösung liegt bei 6,5 - 7. Es wird 1 Stunde nachgerührt und dann wird die trübe Lösung bei 72°C filtriert. Das Filtrat, d.h., die den Polyäther enthaltende Lösung wird für die nächste Reaktionsstufe eingesetzt. Eine getrocknete Probe des Polymers ergibt folgende Kenndaten:

$\eta_{sp}$ = 0,308
Tg = 99°C.

c) Behandlung des Polyätherharzes mit $O_2$.

Die gemäss Beispiel 1b) erhaltene Polymer-Lösung wird mit Äthylenchlorid auf ein Volumen von 3240 ml verdünnt und auf 70 - 72°C erhitzt. Der Kühler wird mit einem Kryostat auf eine Temperatur von -5°C gekühlt und dann wird Sauerstoff in die Polymer-Lösung eingeleitet unter gleichzeitiger kontinuierlicher Zugabe von Azoisobutylnitril (AIBN). Innerhalb von etwa 30 Stunden werden 15,5 g AIBN in 180 ml Äthylenchlorid via Dosimat der Reaktionslösung zugetropft. Das Fortschreiten der Reaktion wird durch Bestimmung der spezifischen Viskosität anhand von Proben kontrolliert. Nach einer Reaktionsdauer von 53,5 Stunden weist das Polymer eine sp. von 0,670 auf. Nach weiteren 50 Minuten wird die Sauerstoffzufuhr abgebrochen, die Reaktionslösung auf Raumtemperatur gekühlt und das Polymer in Methanol ausgefällt, wobei in 5 Portionen von je 700 ml zu 3,5 l Methanol unter sehr gutem Rühren zugetropft wird. Das erhaltene Polymer wird bei 60°C bis zur Gewichtskonstanz im Vakuum getrocknet. Ausbeute: 318,7 g Kenndaten des Polymers:

$\eta_{sp}$ = 0,721
Tg = 125°C.

Das Polymer wird zwecks Vernetzung einer Wärmebehandlung von 3 Stunden bei 250°C an der Luft unterzogen. Danach weist das Polymer einen Tg-Wert von 181°C auf und ist im Methyläthylketon nicht mehr löslich.

**Beispiel 2**

Analog Beispiel 1a) werden in einem 350 ml-Kolben, versehen mit Rührer, Thermometer, Wasserabscheider, Kühler und Kz-Anschluss, 11,53 g (0,05 Mol; 99-%-ig rein) Biphenol A, 501 g (0,025 Mol) Biphenol F, 21,33 g (0,07425 Mol) p,p'-Dichlordiphenylsulfon in 120 ml Dimethylsulfon und 200 ml Chlorbenzol vorgelegt und in Gegenwart von 12 g einer 50-%-igen wässrigen Natronlauge während 6 Stunden bei 155 - 160°C polykondensiert. Die Polymerlösung wird dann mit 200 ml Chlorbenzol verdünnt, und unter Rühren gibt man bei 100°C 2,65 g α-Brom-p-xylol in kleinen Portionen zu. Der pH-Wert der Reaktionslösung beträgt etwa 7. Anschliessend wird die Reaktionslösung bei 100°C filtriert und das Filtrat am Vakuum-Rotationsverdampfer vollständig eingeengt. Danach wird das Polymer 30 Minuten bei 150°C unter Hochvakuum getrocknet. Kenndaten des Polymers:

$\eta_{sp.}$ = 0,318
Tg = 141°C.

Das oben erhaltene Polyätherharz mit Xylylätherendgruppen wird analog Beispiel 1c) mit $O_2$ wie folgt behandelt: 28,5 g des Harzes werden in 250 ml Äthylenchlorid (purris.) bei 70 - 80°C gelöst. Dann wird $O_2$ eingeleitet unter gleichwertiger kontinuierlicher Zugabe von AIBN (2 in Äthylenchlorid) bei 75° - 80°C Reaktionstemperatur. Das Fortschreiten der Reaktion wird durch Bestimmung der $\eta_{sp}$ kontrolliert. Nach einer Reaktionsdauer von 23 Stunden weist das Polymer eine $\eta_{sp.}$ von 0,826 auf. Nach weiteren 48 Minuten wird die Polymerlösung auf Raumtemperatur abgekühlt und das Polymer durch Zutropfen der Lösung in 2 Liter Methanol gefällt. Das Polymer wird im Vakuum bei 80°C getrocknet. Ausbeute: 26,2 g. Kenndaten des Polymers:

$\eta_{sp.}$ = 0,939
Tg = 170°C

Löslichkeit: In Methyläthylketon löslich.

Zur Vernetzung wird das Polymer einer Wärmebehandlung von 3 Stunden bei 250°C an der Luft unterworfen. Das Polymer weist einen Tg-Wert von 184°C auf und ist in Methyläthylketon nicht mehr löslich.

**Beispiel 3**

Analog Beispiel 2 werden 11,02 g (0,05 Mol, 99-%-ig rein) Bis-(4hydroxyphenyl)-thioäther, 5,01 g (0,025 Mol) Biphenol F und 21,33 g (0,07425 Mol) p,p'-Dichlordiphenylsulfon in 150 ml Dimethylsulfon und 200 ml Chlorbenzol und in Gegenwart von 12 g einer 50-%-igen wässrigen Natronlauge polykondensiert und anschliessend wird das Polymer mit 2,65 g α-Brom-p-xylol endverkappt. Das erhaltene Polymer weist eine $\eta_{sp}$ von 0,311 auf. 32 g des oben erhaltenen Polyätherharzes mit Xylylätherendgruppen werden analog Beispiel 2 mit Sauerstoff gehandelt. Nach einer Behandlungsdauer von 7,5 Stunden wird das Polymer gemäss Beispiel 2 aus der Reaktionslösung isoliert und getrocknet. Kenndaten des Polymers:

$\eta_{sp.}$ = 0,717
Tg = 187°C

Löslichkeit: In Methyläthylketon löslich.

Zur Vernetzung wird das Polymer einer Wärmebehandlung von 3 Stunden bei 250°C an der Luft unterworfen. Das Polymer weist einen Tg-Wert von 177°C auf und ist in Methyläthylketon nicht mehr löslich.

**Beispiel 4**

Analog Beispiel 2 werden 10,11 g (0,05 Mol) Bis-(4-hydroxyphenyl)-äther, 5,01 g (0,025 Mol) Bisphenol F und 18,31 g (0,06375 Mol) p,p'-Dichlordiphenylsulfon in 150 ml Dimethylsulfon und 200 ml Chlorbenzol und in Gegenwart von 12 g einer 50-%-igen wässrigen Natronlauge polykondensiert und anschliessend wird das Polymer mit 2,65 g α-Brom-p-xylol endverkappt. Das erhaltene Polymer weist eine $\eta_{sp.}$ von 0,243 auf. 32 g des oben erhaltenen Polyätherharzes mit Xylylätherendgruppen werden analog Beispiel 2 mit Sauerstoff behandelt. Nach einer Behandlungsdauer von 9,4 Stunden wird das Polymer gemäss Beispiel 2 aus der Reaktionslösung isoliert und getrocknet. Kenndaten des Polymers:

$\eta_{sp.}$ = 0,732
Tg = 154°C

Löslichkeit: In Methyläthylketon löslich.

Zur Vernetzung wird das Polymer einer Wärmebehandlung von 90 Minuten bei 280°C an der Luft unterzogen. Das Polymer weist dann einen Tg-Wert von 173°C auf und ist in Methyläthylketon nicht mehr löslich.

**Anwendungsbeispiele**

**Beispiel 1:**

Eine Lage Kohlenstoffasergewebe (G 814 NT der Firma Brochier S.A.) wird mit einer 7,5-%-igen Lösung des Polymers gemäss Beispiel 1c) in Äthylenchlorid viermal imprägniert, dann bei Raumtemperatur an der Luft getrocknet bis es klebfrei ist und anschliessend unter Vakuum nachgetrocknet. Das imprägnierte Gewebestück (Dimension 30 x 5 cm) wird zwischen zwei Kapton®-Folien [Poly(diphenyloxid-pyromellitimid) der Fa. Du Pont] gelegt und dann in eine auf 250°C vorgeheizte Laminierpresse gegeben. Nach einer Behandlungsdauer von 5 Stunden bei einem Druck von 59,82 $10^4$ Pa wird auf 120°C abgekühlt und die Kapton®-Folie entfernt. Vom auf Raumtemperatur abgekühlten Gewebestück wird ein 5 mm breites Stück abgeschnitten und der Tg-Wert bei einer Aufheizgeschwindigkeit von 2°C/Minute bestimmt: 156°C. Die bis auf 300°C erhitzte Probe wird nun mit gleicher Geschwindigkeit (2°C/Min.) abgekühlt und der Tg noch-

mals, im sogenannten Abkühlmodus, bestimmt: 178°C.

Das Polymer ist vor der Vernetzung in Methylenchlorid gut löslich, nach der Vernetzung nicht mehr.

**Beispiel 2**

Eine Kohlenstoffaserbahn der Dimension 260 x 17 cm (G 814 NT) wird durch eine 7,5-%-ige Lösung des Polymers gemäss Beispiel 1c) in Äthylenchlorid gezogen und an der Luft während einer Stunde getrocknet. Dieser Imprägnierungsvorgang wird dreimal wiederholt. Nach dem Trocknen an der Luft über Nacht wird das Prepreg in Stücke der Dimension 20,5 x 13,3 cm geschnitten und im Vakuum bei 40°C bis zur Gewichtskonstanz getrocknet. Der Harzgehalt beträgt 44 Gew-%. 10 Lagen Prepregs werden auf beiden Seiten mit Kupferfolie abgedeckt, das Ganze wird mit Kapton®-Folie umwickelt und in eine auf 250°C vorgewärmte Laminierpresse gelegt. Dann wird innerhalb von 5 Minuten langsam ein Druck von $49{,}04 \cdot 10^5$ Pa aufgepresst. Nach einer Behandlungsdauer von 5 Stunden bei 250°C wird unter Druck auf etwa 100°C abgekühlt, die Form aus der Presser entnommen und das Laminat von der Kaptonfolie befreit.

Die mechanischen Eigenschaften des Laminats, wie Biegefestigkeit und Durchbiegung, werden vor und nach einer 24-stündigen Lagerung in Kochwasser bestimmt:

| | vor Lagerung in Kochwasser | nach Lagerung in Kochwasser |
|---|---|---|
| Biegefestigkeit gemäss VSM 77 103 ($N/mm^2$) | 444,5 | 438,1 |
| Durchbiegung gemäss VSM 77 103 (mm) | 2,4 | 2,4 |

**Patentansprüche**

1. Polyätherharze mit einer spezifischen Viskosität von 0,1 bis 2,5, gemessen bei 30°C an einer 2-%-igen Lösung in Dimethylformamid, die Aralkoxyendgruppen der Formel I

-O-R-Ar (I)

aufweisen und, bezogen auf die Gesamtmenge der im Polyätherharz vorhandenen Strukturelemente, 100 bis 10 Mol-% des wiederkehrenden Strukturelementes der Formel II

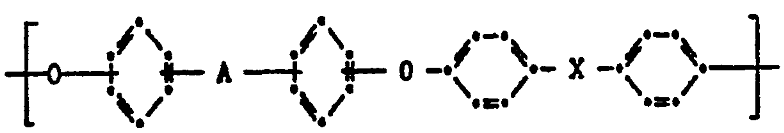

(II)

und 90 bis 0 Mol-% des wiederkehrenden Strukturelementes der Formel III

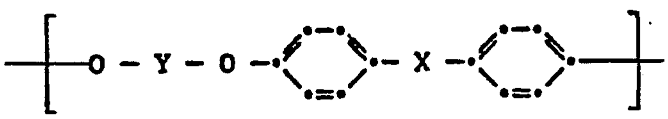

(III)

enthalten, worin

R ein Alkylen mit 1 bis 10 C-Atomen bedeutet,

Ar ein unsubstituiertes oder durch $C_1$-$C_5$-Alkyl substituiertes Phenyl, Naphthyl oder Anthryl bedeutet,

A für einen Rest der Formel IV

$$-(-\underset{R^1}{\underset{|}{CH}}-)_p- \quad (IV)$$

steht, worin, wenn $R^1$ ein Wasserstoffatom bedeutet, p für eine Zahl von 1 bis 100 steht, oder, wenn $R^1$ ein unsubstituiertes oder durch $C_1$-$C_4$-Alkyl kernsubstituiertes Aryl oder Aralkyl mit 6 oder 10 C-Atomen im Ring oder Ringsystem und bis zu 10 C-Atomen im Alkylenrest bedeutet, p für die Zahl 1 steht, X für

$-SO_2-$, $-CO-$, $-SO-$, $-N{=}N-$, $-CF_2-CF_2-$, 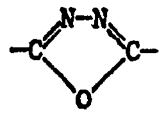 ,

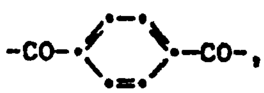 , 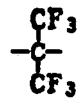 , $-CH{=}CH-$, 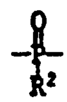 oder 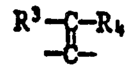 steht,

worin $R^2$ ein $C_1$-$C_8$-Alkyl, $R^3$ und $R^4$ je ein Wasserstoff- oder Halogenatom bedeuten,
Y einen Rest der Formel V oder VI

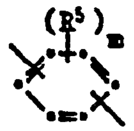 (V) oder 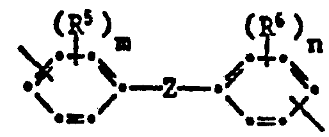 (VI)

bedeutet, worin m und n je für Null oder eine Zahl von 1 bis 4 stehen, $R^5$ und $R^6$ gleich oder verschieden sind und je ein Halogenatom, unsubstituiertes oder phenylsubstituiertes $C_1$-$C_4$-Alkyl oder $C_1$-$C_4$-Alkoxy bedeuten, und, wenn n und m je für 1 oder 2 stehen, $R^5$ und $R^6$ auch je ein Allyl bedeuten und Z für eine direkte Bindung oder einen der folgenden Reste -O-, -SO-, $SO_2$-, -S-, -S-S-,

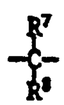 , 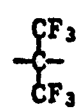 ,

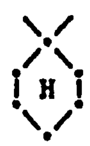 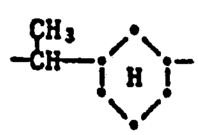 oder 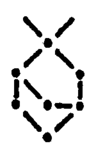

steht, worin $R^7$ und $R^8$ unabhängig voneinander je ein $C_1$-$C_4$-Alkyl oder Phenyl bedeuten.

2. Polyätherharze gemäss Anspruch 1, welche 100 bis 20 Mol-% des wiederkehrenden Strukturelementes der Formel II und 80 bis 0 Mol-% des wiederkehrenden Strukturelementes der Formel III enthalten.

3. Polyätherharze gemäss Anspruch 1, welche 50 bis 30 Mol-% des wiederkehrenden Strukturelementes der Formel II und 70 bis 50 Mol-% des wiederkehrenden Strukturelementes der Formel III enthalten.

4. Polyätherharze gemäss Anspruch 1, worin der Rest R in Formel I ein Alkylen mit 1 bis 7 C-Atomen bedeutet und der Ar in Formel I für ein unsubstituiertes oder durch $C_1$-$C_3$-Alkyl substituiertes Phenyl steht.

5. Polyätherharze gemäss Anspruch 1, worin der Rest A in Formel II einen Rest der Formel IV bedeutet, worin $R^1$ entweder ein Wasserstoffatom bedeutet und p für eine Zahl von 1 bis 20 steht oder $R^1$ Phenyl oder Benzyl bedeutet und p für die Zahl 1 steht.

6. Polyätherharze gemäss Anspruch 1, worin der Rest A in Formel II einen Rest der Formel IV bedeutet, worin $R^1$ für ein Wasserstoffatom und p für eine Zahl von 1 bis 4 stehen.

7. Polyätherharze gemäss Anspruch 1, worin der Rest X in Formel II und III für

$-SO_2-$, $-CO-$, $-SO-$, $-CF_2-CF_2-$, 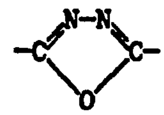 , $-N=N-$,

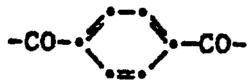 oder 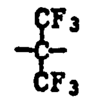 ,

steht.

8. Polyätherharze gemäss Anspruch 1, worin der Rest X in Formel II und III für $-SO_2-$ oder -CO- steht.

9. Polyätherharze gemäss Anspruch 1, worin der Rest Y in Formel III einen Rest der Formel V oder VI bedeutet, worin die freien Valenzen zueinander oder zum Rest Z in Formel VI in p-Stellung stehen, n und m je für Null, 1 oder 2 stehen, $R^5$ und $R^6$ je ein $C_{1-4}$-Alkyl oder Allyl bedeuten und Z für -O-, -S-, Isopropyliden oder Hexafluorisopropyliden steht.

10. Polyätherharze gemäss Anspruch 1, worin der Rest Y in Formel III einen Rest der Formel VI bedeutet, worin die freien Valenzen zum Rest Z in p-Stellung stehen, m und n null bedeuten und Z für -O-, -S- oder Isopropyliden steht.

11. Verfahren zur Herstellung der Polyätherharze gemäss Anspruch 1, dadurch gekennzeichnet, dass man eine Dihalogenverbindung der Formel VII

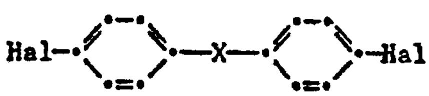 (VII)

mit einem geringen äquimolaren Überschuss einer Verbindung der Formel VIII

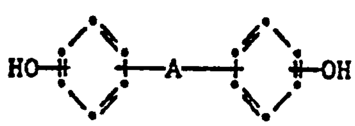 (VIII)

oder eines Gemisches aus einer Verbindung der Formel VIII und einem darin in einer Menge von bis zu 90 Mol-% enthaltenen Phenol der Formel IX

HO–Y–OH (IX)

worin x, A und Y die gleiche Bedeutung wie in Formel II bzw. III haben und Hal für ein Halogenatom steht, in Gegenwart von Alkali in einem polaren aprotischen Lösungsmittel polykondensiert, bis das erhaltene Polyätherharz eine spezifische Viskosität von 0,1 bis 2,5, gemessen bei 30°C an einer 2-%-igen Lösung in Dimethylformamid, aufweist und anschliessend das Hydroxyl- bzw. Phenolat-Endgruppen aufweisende Polyätherharz mit äquivalenten Mengen einer Verbindung der Formel X

Hal—R—Ar (X),

worin R und Ar die gleiche Bedeutung wie in Formel I haben und Hal für ein Halogenatom steht, in einem organischen Lösungsmittel zum Polyätherharz mit Aralkoxyendgruppen umsetzt.

12. Die durch Vernetzung der Polyätherharze gemäss Anspruch 1 erhaltenen Produkte.

**Claims**

1. A polyether resin having a specific viscosity of 0.1 to 2.5, measured at 30°C in a 2 % solution in dimethylformamide, which resin contains aralkoxy end groups of formula I

-O-R-Ar (I)

and, based on the total amount of structural units present in the polyether resin, 100 to 10 mol% of the repeating

structural unit of formula II

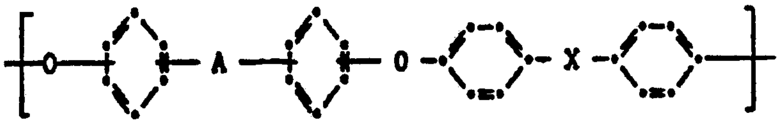

(II)

and 90 to 0 mol% of the repeating structural unit of formula III

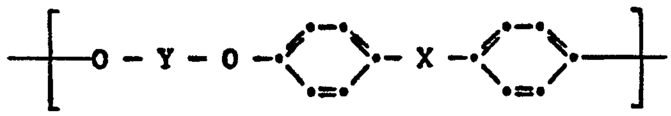

(III)

in which formulae
R is an alkylene, having 1 to 10 C atoms,
Ar is a phenyl, naphthyl or anthryl, each unsubstituted or substituted by $C_1$-$C_4$alkyl,
A is a radical of the formula IV

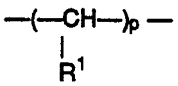

(IV)

in which, if $R^1$ is a hydrogen atom, p is a number from 1 to 100, or, if $R^1$ is an aryl or aralkyl, each of which has 6 to 10 C atoms in the ring or ring system and up to 10 C atoms in the alkylene radical and each of which is unsubstituted or substituted on the ring by $C_1$-$C_4$alkyl, p is the number 1, X is

$-SO_2-$, $-CO-$, $-SO-$, $-N{=}N-$, $-CF_2-CF_2-$, 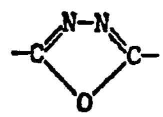 ,

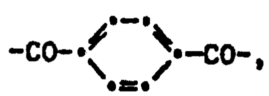 , 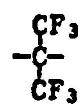 , $-CH{=}CH-$, 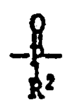 or 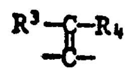

in which formulae $R^2$ is a $C_1$-$C_8$alkyl, and each of $R^3$ and $R^4$ is a hydrogen or halogen atom, Y is a radical of formula V or VI

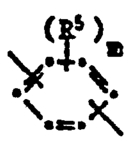

(V) or

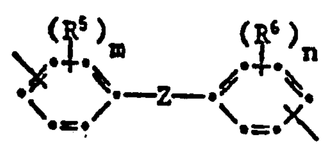

(VI)

in which formulae each of m and n is zero or a number from 1 to 4, $R^5$ and $R^6$ are the same or different and each is a halogen atom, or a $C_1$-$C_4$alkyl or $C_1$-$C_4$alkoxy, each unsubstituted or substituted by phenyl, and, if each of n and m is 1 or 2, each of $R^5$ and $R^6$ is also an allyl, and Z is a direct bond or a radical from the group consisting of -O-, -SO-, $SO_2$-, -S-, -S-S-,

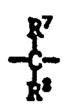 , 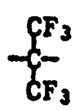 ,

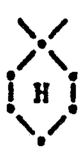 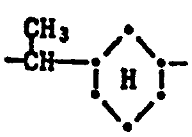 or 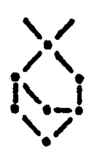

in which formulae each of $R^7$ and $R^8$ independently of the other is a $C_1$-$C_4$alkyl or phenyl.

2. A polyether resin according to claim 1, which contains 100 to 20 mol% of the repeating structural unit of formula II and 80 to 0 mol% of the repeating structural unit of formula III.

3. A polyether resin according to claim 1, which contains 50 to 30 mol% of the repeating structural unit of formula II and 70 to 50 mol% of the repeating structural unit of formula III.

4. A polyether resin according to claim 1, in which the radical R in formula I is an alkylene having 1 to 7 C atoms and Ar in formula I is a phenyl which is unsubstituted or substituted by $C_1$-$C_3$alkyl.

5. A polyether resin according to claim 1, in which the radical A in formula II is a radical of formula IV, in which $R^1$ is either a hydrogen atom and p is a number from 1 to 20 or $R^1$ is phenyl or benzyl and p is the number 1.

6. A polyether resin according to claim 1, in which the radical A in formula II is a radical of formula IV, in which $R^1$ is a hydrogen atom and p is a number from 1 to 4.

7. A polyether resin according to claim 1, in which the radical X in formulae II and III is

$-SO_2-$, $-CO-$, $-SO-$, $-CF_2-CF_2-$, 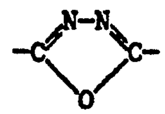 , $-N=N-$,

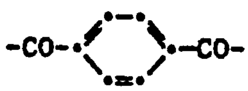 or 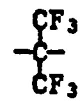 ,

8. A polyether resin according to claim 1, in which the radical X in Lormulae II and III is $-SO_2-$ or -CO-.

9. A polyether resin according to claim 1, in which the radical Y in formula III is a radical of formula V or VI, in which the free valences are in the p-position to one another or to the radical Z in formula VI, each of n and m is zero, 1 or 2, each of $R^5$ and $R^6$ is a $C_1$-$C_4$alkyl or allyl, and Z is -O-, -S-, isopropylidene or hexafluoroisopropylidene.

10. A polyether resin according to claim 1, in which the radical Y in formula III is a radical of formula VI, in which the free valences are in the p-position to the radical Z, each of m and n is zero, and Z is -O-, -S- or isopropylidene.

11. A process for the preparation of a polyether resin according to claim 1, which comprises polycondensing a dihalo compound of formula VII

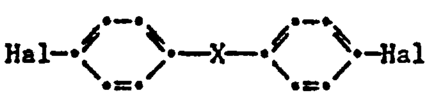

(VII)

with a slight equimolar excess of a compound of formula VIII

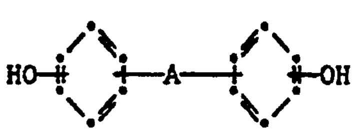

(VIII)

or of a mixture of a compound of formula VIII and a phenol, contained therein in an amount of up to 90 mol%, of formula IX

HO-Y-OH (IX)

in which formulae X, A and Y are as defined in formulae II and III and Hal is a halogen atom, in the presence of alkali and in a polar aprotic solvent, until the resultant polyether resin has a specific viscosity of 0.1 to 2.5, measured at 30°C in a 2 % solution in dimethylformamide, and subsequently reacting the polyether resin which contains hydroxyl or phenolate end groups, with an equimolar amount of a compound of formula X

Hal-R-Ar (X)

in which R and Ar are as defined in formula I and Hal is a halogen atom, in an organic solvent, to give the polyether resin having aralkoxy end groups.

12. A product obtained by crosslinking the polyether resin according to claim 1.

**Revendications**

1. Résines de polyéthers qui ont une viscosité spécifique de 0,1 à 2,5, mesurée à 30°C sur une solutin à 2 % dans du diméthylformamide, qui ont des radicaux aralcoxy terminaux répondant à la formule I:

-O-R-Ar (I)

et qui contiennent, par rapport à la quantité totale des unités structurales présentes dans la résine de polyéther, de 100 à 10 % en moles d'une unité structurale répétée de formule II:

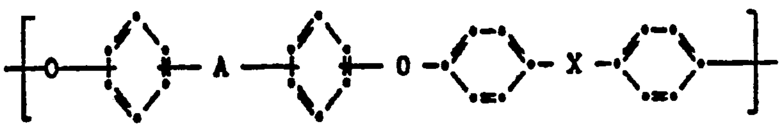 (II)

et de 90 à 0 % en moles d'une unité structurale répétée de formule III:

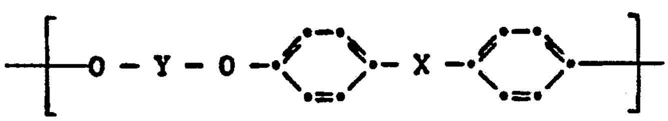 (III)

formules dans lesquelles:
R représente un alkylène contenant de 1 à 10 atomes de carbone,
Ar représente un radical phényle naphtyle ou anthryle non substitué ou porteur d'un alkyle en $C_1$-$C_4$,
A représente un radical de formule IV:

$$-(-\underset{R^1}{\underset{|}{CH}}-)_p- \qquad (IV)$$

dans lequel p désigne un nombre de 1 à 100 lorsque $R^1$ représente un atome d'hydrogène ou le nombre 1 lorsque $R^1$ représente un radical alkyle ou aralkyle contenant 6 ou 10 atomes de carbone dans son cycle ou son système cyclique et au plus 10 atomes de carbone dans son radical alkylène, non substitué ou portant, sur son noyau, un alkyle en $C_1$-$C_4$, X représente un radical:

$-SO_2-$, $-CO-$, $-SO-$, $-N{=}N-$, $-CF_2-CF_2-$, 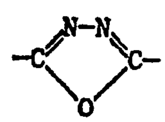 ,

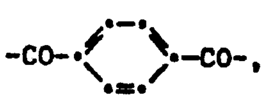, 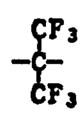, $-CH{=}CH-$, 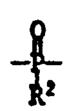 ou 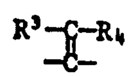

où $R^2$ représente un alkyle en $C_1$-$C_8$ tandis que $R^3$ et $R^4$ représentent chacun atome d'hydrogène ou d'halogène, et
Y représente un radical répondant à l'une des formules V et VI:

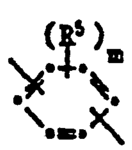 (V) 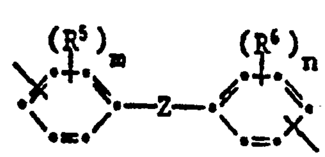 (VI)

dans lesquelles m et n représentent chacun un nombre de 0 à 4, $R^5$ et $R^6$ représentent chacun, indépendamment l'un de l'autre, un atome d'halogène, un radical alcoxy en $C_1$-$C_4$ ou alkyle en $C_1$-$C_4$ non substitué ou porteur d'un phényle et, lorsque n et m sont égaux chacun à 1 ou à 2, $R^5$ et $R^6$ peuvent aussi représenter chacun un allyle, et Z représente une liaison directe ou l'un des radicaux suivants:
-O-, -SO-, $SO_2$, -S-, -S-S-,

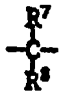 , 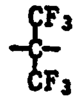 ,

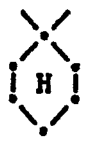 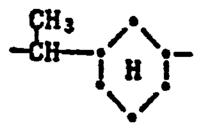 et 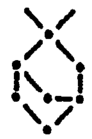

ou $R^7$ et $R^8$ représentent chacun, indépendamment l'un de l'autre, un alkyle en $C_1$-$C_4$ ou un phényle.

2. Résines de polyéthers selon la revendication 1 qui contiennent de 100 à 20 % en moles de l'unité structurale répétée de formule II et de 80 à 0 % en moles de l'unité structurale répétée de formule III.

3. Résines de polyéthers selon la revendication 1 qui contiennent de 50 à 30 % en moles de l'unité structurale répétée de formule II et de 70 à 50 % en moles de l'unité structurale répétée de formule III.

4. Résines de polyéthers selon la revendication 1 dans lesquelles le symbole R, dans la formule I, représente un alkylène contenant de 1 à 7 atomes de carbone et le symbole Ar, dans la formule I, représente un radical phényle non substitué ou porteur d'un alkyle en $C_1$-$C_3$.

5. Résines de polyéthers selon la revendication 1 dans lesquelles le symbole A, dans la formule II, représente un radical de formule IV dont le symbole R représente soit un atome d'hydrogène, auquel cas p désigne un nombre de 1 à 20, soit un radical phényle ou benzyle, auquel cas p est égal à 1.

6. Résines de polyéthers selon la revendication 1 dans lesquelles le symbole A, dans la formule II, représente un radical de formule IV dont le symbole $R^1$ représente un atome d'hydrogène et p désigne un nombre de 1 à 4.

7. Résines de polyéthers selon la revendication 1 dans lesquelles le symbole X, dans les formules II et III, représente un radical:

$-SO_2-$, $-CO-$, $-SO-$, $-CF_2-CF_2-$, 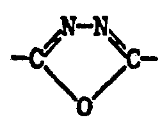 , $-N=N-$,

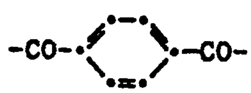 ou 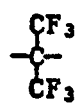 ,

8. Résines de polyéthers selon la revendication 1 dans lesquelles le symbole X, dans les formules II et III, représente un radical $-SO_2-$ ou -CO-.

9. Résines de polyéthers selon la revendication 1 caractérisées en ce que, dans la formule III, le symbole Y représente un radical de formule V ou VI dont les valences libres sont en position para l'une par rapport à l'autre ou par rapport au radical Z de la formule VI, n et m représentent chacun un nombre égal à 0, à 1 ou à 2, $R^5$ et $R^6$ représentent chacun un alkyle en $C_1$-$C_4$ ou un allyle, et Z représente -O-, -S-, un isopropylidène ou un hexafluoro-isopropylidène.

10. Résines de polyéthers selon la revendication 1 caractérisées en ce que, dans la formule III, le symbole Y représente un radical de formule VI dont les valences libres sont en position para relativement au radical Z, m et n sont égaux chacun à O, et Z représente -O-, -S- ou un isopropylidène.

11. Procédé de préparation de résines de 3-polyéthers selon la revendication 1, procédé caractérisé en ce qu'on polycondense en présence d'un alcali, dans un solvant aprotique polaire, un composé dihalogéné de formule VII:

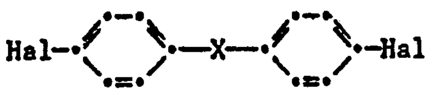

(VII)

avec un léger excès équimolaire d'un composé de formule VIII :

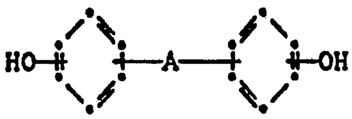

(VIII)

ou d'un mélange constitué d'un composé de formule VIII et d'un phénol de formule IX contenu dans ledit mélange en une quantité d'au plus 90 % en moles:

HO-Y-OH (IX)

formules dans lesquelles X, A et Y ont les mêmes significations que dans les formules II et III, et Hal représente un atome d'halogène, jusqu'à ce que la résine de polyéther obtenue ait une viscosité spécifique, mesurée à 30°C sur une solution à 2 % dans du diméthylformamide, comprise entre 0,1 et 2,5, puis on fait réagir la résine de polyéther qui contient des radicaux hydroxy ou phénolates terminaux avec des quantités équivalentes d'un composé répondant à la formule X:

Hal-R-Ar (X)

dans laquelle R et Ar ont les mêmes significations que dans la formule I et Hal représente un atome d'halogène, dans un solvant organique, de manière à obtenir la résine de polyéther à radicaux aralcoxy terminaux.

12. Produits obtenus par réticulation des résines de polyéthers selon la revendication 1.